(19) **Europäisches Patentamt / European Patent Office / Office européen des brevets**

(11) **EP 3 800 220 B1**

(12) **EUROPEAN PATENT SPECIFICATION**

(45) Date of publication and mention
of the grant of the patent:
**23.08.2023 Bulletin 2023/34**

(21) Application number: **20195509.3**

(22) Date of filing: **10.09.2020**

(51) International Patent Classification (IPC):
**C08L 7/00** $^{(2006.01)}$    **B60C 1/00** $^{(2006.01)}$
**C08L 9/00** $^{(2006.01)}$    **C08L 47/00** $^{(2006.01)}$
**C08K 3/26** $^{(2006.01)}$

(52) Cooperative Patent Classification (CPC):
(C-Sets available)
**C08L 7/00; B60C 1/0016**    (Cont.)

(54) **HEAVY DUTY TIRE**

SCHWERLASTREIFEN

PNEU POUR FONCTIONNEMENT INTENSIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.10.2019 JP 2019182372**

(43) Date of publication of application:
**07.04.2021 Bulletin 2021/14**

(73) Proprietor: **Sumitomo Rubber Industries, Ltd.
Kobe-shi, Hyogo-ken 651-0072 (JP)**

(72) Inventor: **Kasei, Yuki
Kobe-shi, Hyogo 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**JP-A- 2018 119 025    JP-A- 2018 154 664**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

**C-Sets**
**C08L 7/00, C08L 9/00, C08L 47/00, C08L 91/00,**
**C08L 91/06, C08K 3/26, C08K 3/04, C08K 3/04,**
**C08K 3/36, C08K 5/09, C08K 3/22, C08K 3/06,**
**C08K 5/548, C08K 5/18;**
**C08L 7/00, C08L 9/00, C08L 91/00, C08L 47/00,**
**C08L 91/06, C08K 3/26, C08K 3/04, C08K 3/04,**
**C08K 3/36, C08K 5/09, C08K 3/22, C08K 3/06,**
**C08K 5/548, C08K 5/18**

**Description**

TECHNICAL FIELD

The present invention relates to heavy duty tires.

BACKGROUND ART

Among the important properties required of tires are ice performance and abrasion resistance. It is desirable to simultaneously achieve these properties. For example, it has been proposed to enhance ice performance, e.g., by adding eggshell powder. However, this technique tends to result in deteriorated abrasion resistance. Generally, it is difficult to achieve both ice performance and abrasion resistance. JP 2018-119025 A and JP 2018-154664 A disclose tire treads comprising rubber compositions which include natural rubber, butadiene rubber, a terpene resin and eggshell powder.

SUMMARY OF INVENTION

TECHNICAL PROBLEM

The present invention aims to solve the problem and provide heavy duty tires having improved overall performance in terms of ice performance and abrasion resistance.

SOLUTION TO PROBLEM

The present invention relates to a heavy duty tire, including a tread,

the tread containing an isoprene-based rubber, a polybutadiene rubber, and a resin,
the tread showing a tan $\delta$ versus temperature curve with a tan $\delta$ peak in the temperature range of -70°C to - 20°C,
wherein a tan $\delta$ at the peak and a half-width of the peak satisfy the relationship (1) below,
the tread having a surface roughness after abrasion of 5.5 or more,

```
(the tan δ at the peak in the temperature range of −70°C to
−20°C)/(the half−width of the peak) ≥ 0.021     (1).
```

The value of relationship (1) is preferably 0.022 or more, more preferably 0.023 or more, still more preferably 0.024 or more.
The surface roughness is preferably 6.0 or more, more preferably 6.5 or more.
The resin is preferably a terpene resin, more preferably a terpene resin having an $\alpha$-pinene unit content of 65 to 100% by mass, a $\beta$-pinene unit content of 0 to 350 by mass, and a limonene unit content of 10% by mass or less.
The tread preferably contains eggshell powder.
The eggshell powder preferably has an average particle size of 70 um or more.

ADVANTAGEOUS EFFECTS OF INVENTION

The present invention provides a heavy duty tire including a tread which contains an isoprene-based rubber, a polybutadiene rubber, and a resin and shows a tan $\delta$ versus temperature curve with a tan $\delta$ peak in the temperature range of -70°C to -20°C, wherein the tan $\delta$ at the peak and the half-width of the peak satisfy relationship (1), and which has a surface roughness after abrasion of 5.5 or more. Such a heavy duty tire provides improved overall performance in terms of ice performance and abrasion resistance.

BRIEF DESCRIPTION OF DRAWINGS

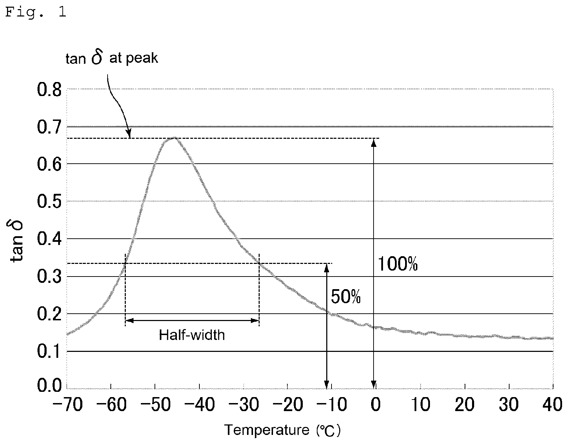

Fig. 1 illustrates an exemplary tan $\delta$ versus temperature curve of a rubber composition.

DESCRIPTION OF EMBODIMENTS

The heavy duty tire of the present invention includes a tread. The tread contains an isoprene-based rubber, a polybutadiene rubber, and a resin. Further, the tread shows a tan $\delta$ versus temperature curve with a tan $\delta$ peak in the temperature range of -70°C to -20°C, wherein the tan $\delta$ at the peak and the half-width of the peak satisfy the relationship (1) below. Further, the tread has a surface roughness after abrasion of 5.5 or more.

$$\text{(the tan } \delta \text{ at the peak in the temperature range of } -70°\text{C to} \\ -20°\text{C)/(the half-width of the peak)} \geq 0.021 \quad (1).$$

Good overall performance in terms of ice performance and abrasion resistance is provided when the "the tan $\delta$ at the peak in the temperature range of -70°C to -20°C (the maximum tan $\delta$ value in the tan $\delta$ versus temperature curve in the temperature range of -70°C to -20°C)"/"the half-width of the peak [(the higher temperature at which the tan $\delta$ reaches half the maximum tan $\delta$ value) - (the lower temperature at which the tan $\delta$ reaches half the maximum tan $\delta$ value), FWHM]" (unit: 1/°C) is not lower than the lower limit, and at the same time the surface roughness after abrasion is not lower than the lower limit.

The reason why the heavy duty tire provides this advantageous effect is not exactly clear, but the effect mechanism is believed to be as follows.

The above-mentioned surface roughness is the surface roughness after abrasion, preferably after a specific abrasion treatment on a rubber piece cut out of the tread, and is preferably the surface roughness of a sample having undergone a Lambourn abrasion test. The abrasion treatment can be used to suitably simulate the tread surface of a heavy duty tire running on an icy road. Then, when the surface roughness after abrasion is adjusted to 5.5 or more, good ice performance can be provided. The resulting surface is much rougher than the conventional tread surface because the surface roughness after abrasion is approximately 3 in the prior art. Thus, better ice performance can be achieved.

However, the inventor has found that although adjusting the surface roughness after abrasion to 5.5 or more provides good ice performance, it can disadvantageously result in deteriorated abrasion resistance.

As a result of extensive studies on this problem, the inventor has discovered that a tread containing an isoprene-based rubber, a polybutadiene rubber, and a resin provides good overall performance in terms of ice performance and abrasion resistance when the tread has a surface roughness after abrasion of 5.5 or more and further satisfies relationship (1).

This may be explained as follows.

A tread satisfying relationship (1) has properties such as a relatively high peak tan $\delta$ and a relatively sharp waveform of a tan $\delta$ versus temperature curve. Thus, the tread is believed to exhibit effects such as enhanced ice performance due to the high tan $\delta$ peak, and improved ice performance and abrasion resistance due to the sharp waveform.

This is believed to be why the heavy duty tire provides improved overall performance in terms of ice performance and abrasion resistance.

As described, a heavy duty tire provides good overall performance in terms of ice performance and abrasion resistance when it includes a tread which contains an isoprene-based rubber, a polybutadiene rubber, and a resin and shows a tan $\delta$ versus temperature curve with a tan $\delta$ peak in the temperature range of -70°C to -20°C, wherein the tan $\delta$ at the peak and the half-width of the peak satisfy relationship (1), and which has a surface roughness after abrasion of 5.5 or more. Thus, the present invention solves the problem (purpose) of overall performance in terms of ice performance and abrasion resistance by a tire structure including a tread which satisfies the parameters: relationship (1) and surface roughness after abrasion. Specifically, these parameters do not define the problem (purpose), and the problem to be solved by the invention is overall performance in terms of ice performance and abrasion resistance. In order to provide a solution to this problem, a structure combining these parameters (relationship (1) and surface roughness after abrasion) has been devised. In other words, the essential feature is to simultaneously satisfy the two parameters.

A tread rubber satisfying relationship (1) may be prepared by a variety of techniques that can change the tan $\delta$. Examples of such techniques for satisfying relationship (1) include a method of incorporating a resin highly compatible with a rubber component, and a method of increasing or decreasing filler. For example, the value of relationship (1) can be reduced by increasing the amount of filler.

Among these methods, the incorporation of a resin highly compatible with a rubber component can result in a higher peak tan $\delta$ and a sharper waveform (smaller half-width) of a tan $\delta$ versus temperature curve and therefore a larger value of relationship (1).

The resin highly compatible with a rubber component, especially an isoprene-based rubber and a polybutadiene rubber may suitably be a terpene resin, especially a terpene resin having an $\alpha$-pinene unit content of 65 to 100% by mass, a $\beta$-pinene unit content of 0 to 35% by mass, and a limonene unit content of 10% by mass or less. The use of such a resin can lead to a higher peak tan $\delta$ and a sharper waveform (smaller half-width) of a tan $\delta$ versus temperature curve and therefore a larger value of relationship (1). Thus, the overall performance in terms of ice performance and abrasion resistance is believed to be significantly improved.

A tread rubber satisfying the surface roughness after abrasion may be prepared by a variety of techniques that can change the surface roughness. Examples of such techniques for satisfying the surface roughness after abrasion include a method of incorporating a surface roughening agent.

In this method, the incorporation of a surface roughening agent having a greater average particle size can lead to a greater surface roughness after abrasion. The incorporation of a larger amount of a surface roughening agent can also lead to a greater surface roughness after abrasion.

The surface roughening agent may suitably be eggshell powder, especially eggshell powder having an average particle size of 70 um or more. The use of such a surface roughening agent can lead to a greater surface roughness after abrasion. Thus, ice performance is believed to be significantly improved.

In the tan δ versus temperature curve, the value of "(the tan δ at the peak in the temperature range of -70°C to -20°C)/(the half-width of the peak)" (the value of relationship (1)) is 0.021 or more as shown in relationship (1), and is preferably 0.022 or more, more preferably 0.023 or more, still more preferably 0.024 or more, particularly preferably 0.025 or more, most preferably 0.027 or more, still most preferably 0.028 or more, further most preferably 0.029 or more, particularly most preferably 0.030 or more. The upper limit is not limited but is preferably 0.060 or less, more preferably 0.055 or less, still more preferably 0.050 or less, particularly preferably 0.045 or less, most preferably 0.035 or less. When the value is within the range indicated above, the advantageous effect tends to be more suitably achieved.

In the tan δ versus temperature curve, the tan δ at the peak in the temperature range of -70°C to -20°C is preferably 0.60 or more, more preferably 0.70 or more, still more preferably 0.80 or more. The upper limit is not limited, and the tan δ is desirably as high as possible. When the tan δ is within the range indicated above, the advantageous effect tends to be more suitably achieved.

The half-width of the peak is preferably 30°C or less, more preferably 25°C or less, still more preferably 20°C or less. The lower limit is not limited, and the half-width is desirably as small as possible. When the half-width is within the range indicated above, the advantageous effect tends to be more suitably achieved.

A rubber composition showing a tan δ versus temperature curve which satisfies the tan δ at the peak in the temperature range of -70°C to -20°C and the half-width of the peak can be prepared using, for example, techniques similar to the techniques for satisfying relationship (1).

The tan δ versus temperature curve may have a plurality of peak tops. In this case, it is sufficient that with respect to at least one peak (curve), the value of (the tan δ at the peak)/(the half-width of the curve including the peak) fall within the range indicated above. Moreover, suitably, with respect to at least one peak (curve), the tan δ at the peak and the half-width of the curve including the peak fall within the respective ranges indicated above.

The tan δ versus temperature curve can be measured as described later in EXAMPLES. The measured curve can be used to determine the tan δ at the peak and the half-width.

The surface roughness (Ra) after abrasion is 5.5 or more, preferably 6.0 or more, more preferably 6.5 or more, still more preferably 7.0 or more, particularly preferably 8.0 or more, most preferably 9.0 or more, still most preferably 10 or more, but is preferably 20 or less, more preferably 18 or less, still more preferably 16 or less, particularly preferably 14 or less, most preferably 12 or less. When the surface roughness is within the range indicated above, the advantageous effect tends to be more suitably achieved.

The above-mentioned surface roughness is the surface roughness after abrasion, and specifically the surface roughness of an abraded surface formed by abrading a rubber piece cut out of a tread with a Lambourn abrasion tester. The abrasion conditions are described in EXAMPLES. The surface roughness refers to the ten-point mean roughness (RzJIS) measured in accordance with Appendix 1 (Reference) of JIS B0601:2001 under the conditions described in EXAMPLES.

Next, the rubber composition used to produce the tread is described.

The rubber composition includes an isoprene-based rubber, a polybutadiene rubber (BR), and a resin.

Examples of the isoprene-based rubber include natural rubbers (NR), polyisoprene rubbers (IR), refined NR, modified NR, and modified IR. The NR may be one commonly used in the tire industry such as SIR20, RSS#3, or TSR20. Non-limiting examples of the IR include those commonly used in the tire industry such as IR2200. Examples of the refined NR include deproteinized natural rubbers (DPNR) and highly purified natural rubbers (UPNR). Examples of the modified NR include epoxidized natural rubbers (ENR), hydrogenated natural rubbers (HNR), and grafted natural rubbers. Examples of the modified IR include epoxidized polyisoprene rubbers, hydrogenated polyisoprene rubbers, and grafted polyisoprene rubbers. These may be used alone or in combinations of two or more.

The amount of the isoprene-based rubber based on 100% by mass of the rubber component in the rubber composition is preferably 10% by mass or more, more preferably 30% by mass or more, still more preferably 50% by mass or more, but is preferably 90% by mass or less, more preferably 80% by mass or less, still more preferably 70% by mass or less. When the amount is within the range indicated above, the advantageous effect tends to be more suitably achieved.

Any polybutadiene rubber (BR) may be used. Examples include those commonly used in the tire industry, such as high-cis BR, BR containing 1,2-syndiotactic polybutadiene crystals (SPB-containing BR), polybutadiene rubbers synthesized using rare earth catalysts (rare earth-catalyzed BR), and tin-modified polybutadiene rubbers (tin-modified BR) which have been modified by tin compounds. Examples of commercially available BR include products of Ube Industries, Ltd., JSR Corporation, Asahi Kasei Corporation, and Zeon Corporation. These may be used alone or in combinations of two or more.

From standpoints such as good snow and ice performance and abrasion resistance, the BR preferably has a cis content of 90% by mass or higher, more preferably 95% by mass or higher.

Herein, the cis content (cis-1,4-bond content) is determined by infrared absorption spectrum analysis or calculated from the signal intensities measured by NMR analysis.

The amount of the BR based on 100% by mass of the rubber component in the rubber composition is preferably 10% by mass or more, more preferably 20% by mass or more, still more preferably 30% by mass or more, but is preferably 90% by mass or less, more preferably 70% by mass or less, still more preferably 50% by mass or less. When the amount is within the range indicated above, the advantageous effect tends to be more suitably achieved.

The combined amount of the isoprene-based rubber and BR based on 100% by mass of the rubber component in the rubber composition is preferably 60% by mass or more, more preferably 80% by mass or more, still more preferably 90% by mass or more, and may be 100% by mass. When the combined amount is within the range indicated above, the advantageous effect tends to be more suitably achieved.

Examples of rubbers other than the isoprene-based rubber and BR that may be used in the rubber component include diene rubbers such as styrene-butadiene rubbers (SBR), acrylonitrile-butadiene rubbers (NBR), chloroprene rubbers (CR), butyl rubbers (IIR), and styrene-isoprene-butadiene copolymer rubbers (SIBR). These diene rubbers may be used alone or in combinations of two or more.

The rubber component (including the isoprene-based rubber and BR) may include a non-modified rubber or a modified rubber.

The modified rubber may be any rubber having a functional group interactive with a filler such as silica. For example, it may be a chain end-modified rubber obtained by modifying at least one chain end of a rubber with a compound (modifier) having the functional group (i.e., a chain end-modified rubber terminated with the functional group); a backbone-modified rubber having the functional group in the backbone; a backbone- and chain end-modified rubber having the functional group in both the backbone and chain end (e.g., a backbone- and chain end-modified rubber in which the backbone has the functional group, and at least one chain end is modified with the modifier); or a chain end-modified rubber that has been modified (coupled) with a polyfunctional compound having two or more epoxy groups in the molecule so that a hydroxyl or epoxy group is introduced.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxyl, oxy, and epoxy groups. These functional groups may be substituted. Among these, amino (preferably amino whose hydrogen atom is replaced with a C1-C6 alkyl group), alkoxy (preferably C1-C6 alkoxy), and alkoxysilyl (preferably C1-C6 alkoxysilyl) groups are preferred.

Any resin may be used. Examples include terpene resins, coumarone resins, styrene resins, dicyclopentadiene resins (DCPD resins), C5 petroleum resins, C9 petroleum resins, C5C9 petroleum resins, p-t-butylphenol acetylene resins, and acrylic resins. These may be used alone or in combinations of two or more. These resins may be hydrogenated. Among these, resins which are highly compatible with isoprene-based rubbers and BR, and specifically terpene resins, coumarone resins, and styrene resins are preferred, with terpene resins being more preferred.

The resin preferably has a softening point of -30°C or higher, more preferably 30°C or higher, still more preferably 60°C or higher, particularly preferably 80°C or higher, most preferably 100°C or higher, but preferably 200°C or lower, more preferably 160°C or lower. When the softening point is within the range indicated above, the advantageous effect tends to be more suitably achieved.

Herein, the softening point of the resin is determined in accordance with JIS K 6220-1:2001 using a ring and ball softening point measuring apparatus and defined as the temperature at which the ball drops down.

The resin may be a commercial product of, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., or Taoka Chemical Co., Ltd.

Any terpene resin having units derived from a terpene compound may be used. Examples include polyterpenes (resins produced by polymerization of terpene compounds), terpene aromatic resins (resins produced by copolymerization of terpene compounds with aromatic compounds), and aromatic-modified terpene resins (resins obtained by modification of terpene resins with aromatic compounds). These may be used alone or in combinations of two or more. Polyterpenes are preferred among these.

The term "terpene compound" refers to a hydrocarbon having a composition represented by $(C_5H_8)_n$ or an oxygen-containing derivative thereof, each of which has a terpene backbone and is classified as, for example, a monot-

erpene ($C_{10}H_{16}$), sesquiterpene ($C_{15}H_{24}$), or diterpene ($C_{20}H_{32}$). Examples of such terpene compounds include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol. Other examples of the terpene compounds include resin acids (rosin acids) such as abietic acid, neoabietic acid, palustric acid, levopimaric acid, pimaric acid, and isopimaric acid. In other words, the terpene resins include rosin resins formed mainly of rosin acids produced by processing pine resin. Examples of the rosin resins include natural rosin resins (polymerized rosins) such as gum rosins, wood rosins, and tall oil rosins; modified rosin resins such as maleic acid-modified rosin resins and rosin-modified phenol resins; rosin esters such as rosin glycerol esters; and disproportionated rosin resins obtained by disproportionation of rosin resins.

The aromatic compounds may be any compound having an aromatic ring. Examples include phenol compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; styrene and styrene derivatives such as alkylstyrenes, alkoxystyrenes, and unsaturated hydrocarbon group-containing styrenes. Styrene is preferred among these.

Preferred among the terpene resins are terpene resins (a-pinene resins) having an α-pinene unit content of 65 to 100% by mass, a β-pinene unit content of 0 to 35% by mass, and a limonene unit content of 10% by mass or less.

The terpene resins are highly compatible with isoprene-based rubbers and BR. Among the terpene resins, terpene resins having a high α-pinene unit content (α-pinene resins) have a linear structure and thus provide a large contact area with the polymer, which can result in better compatibility between the rubber component and the resin, a higher tan δ at the peak, and a sharper waveform (smaller half-width) of a tan δ versus temperature curve, and therefore a larger value of relationship (1). Thus, the overall performance in terms of ice performance and abrasion resistance can be further improved.

Moreover, when the softening point and molecular weight (number average molecular weight (Mn), z-average molecular weight (Mz), weight average molecular weight (Mw), etc.) of the α-pinene resins are controlled within the ranges indicated below, the α-pinene resins have further enhanced compatibility with the rubber component, which can result in a much larger value of relationship (1). Thus, the overall performance in terms of ice performance and abrasion resistance can be further improved.

The softening point of the α-pinene resins is preferably 60 to 150°C. The lower limit is preferably 70°C or higher, more preferably 100°C or higher, still more preferably 110°C or higher. The upper limit is preferably 140°C or lower, more preferably 135°C or lower. A softening point of not lower than the lower limit tends to lead to good abrasion resistance. A softening point of not higher than the upper limit tends to lead to good processability.

The number average molecular weight (Mn) of the α-pinene resins is preferably 500 to 775. The lower limit is more preferably 580 or more, still more preferably 620 or more. The upper limit is more preferably 765 or less, still more preferably 755 or less. When the Mn is within the range indicated above, good overall performance in terms of ice performance and abrasion resistance, and other properties tend to be obtained.

The z-average molecular weight (Mz) of the α-pinene resins is preferably 1300 to 1600. The lower limit is more preferably 1310 or more, still more preferably 1320 or more. The upper limit is more preferably 1570 or less, still more preferably 1550 or less. When the Mz is within the range indicated above, good overall performance in terms of ice performance and abrasion resistance, and other properties tend to be obtained.

The weight average molecular weight (Mw) of the α-pinene resins is preferably 800 to 1100. When the Mw is within the range indicated above, good overall performance in terms of ice performance and abrasion resistance, and other properties tend to be obtained.

The molecular weight distribution (Mw/Mn) of the α-pinene resins is preferably 1.30 to 1.70. When the Mw/Mn is within the range indicated above, good overall performance in terms of ice performance and abrasion resistance, and other properties tend to be obtained.

The Mn, Mw, and Mz are measured by gel permeation/size exclusion chromatography (GPC-SEC) as set forth in ASTM D5296 (published in 2005).

The glass transition temperature (Tg) of the α-pinene resins is preferably 25 to 90°C. The lower limit is more preferably 35°C or higher, still more preferably 38°C or higher. The upper limit is more preferably 85°C or lower, still more preferably 81°C or lower. When the Tg is within the range indicated above, good overall performance in terms of ice performance and abrasion resistance, and other properties tend to be obtained.

The Tg is measured using a differential scanning calorimeter (SC Q2000 available from TA Instruments) in accordance with ASTM D6604 (published in 2013).

The limonene unit content of the α-pinene resins (the amount of limonene units based on 100% by mass of the α-pinene resins) is preferably 10% by mass or lower, more preferably 5% by mass or lower, still more preferably 1% by mass or lower, particularly preferably 0% by mass. When the content is within the range indicated above, good overall performance in terms of ice performance and abrasion resistance, and other properties tend to be obtained.

The α-pinene resins may be homopolymers of single terpenes (terpene monomers), copolymers of two or more terpenes, or copolymers of at least one terpene and at least one additional monomer other than terpenes. These may be used alone or in combinations of two or more.

From standpoints such as overall performance in terms of ice performance and abrasion resistance, the terpene unit content of the $\alpha$-pinene resins (the amount of terpene units based on 100% by mass of the $\alpha$-pinene resins) is preferably 80% by mass or higher, more preferably 90% by mass or higher, still more preferably 95% by mass or higher, particularly preferably 99% by mass or higher, and may be 100% by mass. In this case, the $\alpha$-terpene resins may be homopolymers or copolymers having only terpenes as structural units.

The $\alpha$-pinene resins may suitably be polymers having $\alpha$-pinene units or polymers having $\alpha$- and $\beta$-pinene units. Specific examples of such polymers include $\alpha$-pinene homopolymers and copolymers having $\alpha$- and $\beta$-pinene units.

From standpoints such as overall performance in terms of ice performance and abrasion resistance, the $\alpha$-pinene unit content of the $\alpha$-pinene resins (the amount of $\alpha$-pinene units based on 100% by mass of the $\alpha$-pinene resins) is suitably within the range of 65 to 100% by mass. The $\alpha$-pinene unit content is more preferably 70% by mass or higher, still more preferably 80% by mass or higher, particularly preferably 90% by mass or higher, and may be 100% by mass.

From standpoints such as overall performance in terms of ice performance and abrasion resistance, the $\beta$-pinene unit content of the $\alpha$-pinene resins (the amount of $\beta$-pinene units based on 100% by mass of the $\alpha$-pinene resins) is suitably within the range of 0 to 35% by mass. The $\beta$-pinene unit content is more preferably 30% by mass or lower, still more preferably 20% by mass or lower, particularly preferably 15% by mass or lower, most preferably 10% by mass or lower, and may be 0% by mass.

From standpoints such as overall performance in terms of ice performance and abrasion resistance, the combined content of $\alpha$- and $\beta$-pinene units of the $\alpha$-pinene resins (the combined amount of $\alpha$- and $\beta$-pinene units based on 100% by mass of the $\alpha$-pinene resins) is preferably 80% by mass or higher, more preferably 90% by mass or higher, still more preferably 95% by mass or higher, particularly preferably 99% by mass or higher, and may be 100% by mass.

The $\alpha$-pinene resins may be synthesized, for example, by cationically polymerizing one or two or more terpene monomers and other monomers using a Lewis acid catalyst.

Non-limiting examples of the Lewis acid catalyst include metal halides such as $BF_3$, $BBr_3$, $AlF_3$, $AlBr_3$, $TiCl_4$, $TiBr_4$, $TiL_4$, $FeCl_3$, $FeCl_2$, $SnCl_4$, $WCl_6$, $MoCl_5$, $ZrCl_4$, $SbCl_3$, $SbCl_5$, $TeCl_2$, and $ZnCl_2$; metal alkyl compounds such as $Et_3Al$, $Et_2AlCl_3$, $EtAlCl_2$, $Et_3Al_2Cl_3$, (i-Bu)$_3$Al, (i-Bu)$_2$AlCl, (i-Bu)AlCl$_2$, $Me_4Sn$, $Et_4Sn$, $Bu_4Sn$, and $Bu_3SnCl$; and metal alkoxy compounds such as Al(OR) $_{3-x}Cl_x$ and Ti (OR) $_{4-y}Cl_y$ wherein R represents an alkyl group or an aryl group, x represents an integer of 1 or 2, and y represents an integer of 1 to 3. Other examples include: (i) combinations of $AlCl_3$ and alkyl tertiary amines such as trimethylamine, (ii) combinations of $AlCl_3$ and organosilicon compounds such as trialkyl silicon halides, lower dialkyl phenyl silicon halides, or hexaalkyldisiloxanes, (iii) combinations of $AlCl_3$ and organogermanium halides such as trimethylgermanium chloride or triethylgermanium ethoxide, and (iv) C1-C18 lower alkyl groups.

When the cationic polymerization is performed by solution polymerization, any solvent that allows polymerization of terpene monomers may be used. Examples include halogenated hydrocarbons, aromatic hydrocarbons, and aliphatic hydrocarbons. Specific examples include halogenated hydrocarbon solvents such as methylene chloride, chloroform, 1,1-dichloromethane, 1,2-dichloroethane, n-propyl chloride, 1-chloro-n-butane, and 2-chloro-n-butane; aromatic hydrocarbon solvents such as benzene, toluene, xylene, anisole, and naphtha; and aliphatic hydrocarbon solvents such as pentane, hexane, heptane, octane, cyclopentane, cyclohexane, methylcyclohexane, and ethylcyclohexane. The polymerization reaction may be carried out at a temperature of, for example, -120 to 100°C, -80 to 80°C, or 5 to 50°C.

The amount of the resin (preferably terpene resin, more preferably $\alpha$-pinene resin) per 100 parts by mass of the rubber component is preferably 1 part by mass or more, more preferably 3 parts by mass or more, still more preferably 5 parts by mass or more, particularly preferably 8 parts by mass or more, most preferably 12 parts by mass or more, still most preferably 15 parts by mass or more, but is preferably 100 parts by mass or less, more preferably 80 parts by mass or less, still more preferably 60 parts by mass or less, particularly preferably 40 parts by mass or less, most preferably 30 parts by mass or less, still most preferably 25 parts by mass or less. When the amount is within the range indicated above, the advantageous effect tends to be more suitably achieved.

The rubber composition preferably contains a surface roughening agent to satisfy the surface roughness after abrasion.

Any surface roughening agent may be used. Examples include eggshell powder, short fibers, zinc oxide whisker, husk powder, shirasu particles, ground walnut, volcanic ash, and fine iron particles. These may be used alone or in combinations of two or more. Eggshell powder is preferred among these. The eggshell powder can be formed by grinding eggshells, and its main component is calcium carbonate.

The average particle size of the surface roughening agent (preferably eggshell powder) is preferably 50 um or more, more preferably 70 um or more, still more preferably 90 um or more. The upper limit is not limited but is preferably 250 um or less, more preferably 200 um or less, still more preferably 150 um or less, particularly preferably 120 um or less. When the average particle size is within the range indicated above, the advantageous effect tends to be better achieved.

The average particle size of the surface roughening agent (eggshell powder) is measured using a particle size distribution analyzer.

The eggshell powder may be a commercial product of, for example, Green Techno21 or Kewpie Corporation.

From the standpoint of ice performance, the amount of the eggshell powder per 100 parts by mass of the rubber component is preferably 0.5 parts by mass or more, more preferably 2 parts by mass or more, still more preferably 5 parts by mass or more, particularly preferably 10 parts by mass or more. From the standpoint of abrasion resistance, the amount is also preferably 50 parts by mass or less, more preferably 30 parts by mass or less, still more preferably 20 parts by mass or less.

The rubber composition preferably contains carbon black.

Any carbon black may be used, and examples include furnace black (furnace carbon black) such as SAF, ISAF, HAF, MAF, FEF, SRF, GPF, APF, FF, CF, SCF, and ECF; acetylene black (acetylene carbon black); thermal black (thermal carbon black) such as FT and MT; channel black (channel carbon black) such as EPC, MPC, and CC; and graphite. These may be used alone or in combinations of two or more.

To obtain good ice performance and abrasion resistance, the carbon black preferably has a nitrogen adsorption specific surface area ($N_2SA$) of 50 $m^2/g$ or more, more preferably 80 $m^2/g$ or more, but preferably 200 $m^2/g$ or less, more preferably 150 $m^2/g$ or less. For the same reason, the carbon black preferably has a dibutyl phthalate (DBP) absorption of 50 mL/100 g or more, more preferably 80 mL/100 g or more, but preferably 200 mL/100 g or less, more preferably 150 mL/100 g or less.

To obtain good ice performance and abrasion resistance, it is preferred to use a carbon black having a $N_2SA$ of 100 to 120 $m^2/g$ and a carbon black having a $N_2SA$ of 135 to 155 $m^2/g$ in combination.

The nitrogen adsorption specific surface area of the carbon black is measured in accordance with ASTM D4820-93. The DBP absorption of the carbon black is measured in accordance with ASTM D2414-93.

Non-limiting examples of the carbon black include N134, N110, N220, N234, N219, N339, N330, N326, N351, N550, and N762. Examples of commercially available carbon blacks include products of Asahi Carbon Co., Ltd., Cabot Japan K.K., Tokai Carbon Co., Ltd., Mitsubishi Chemical Corporation, Lion Corporation, NSCC Carbon Co., Ltd., and Columbia Carbon. These may be used alone or in combinations of two or more.

The amount of the carbon black per 100 parts by mass of the rubber component is preferably 5 parts by mass or more, more preferably 10 parts by mass or more, still more preferably 20 parts by mass or more, particularly preferably 30 parts by mass or more, most preferably 40 parts by mass or more, but is preferably 100 parts by mass or less, more preferably 80 parts by mass or less, still more preferably 60 parts by mass or less. When the amount is within the range indicated above, good ice performance and abrasion resistance tend to be obtained.

The rubber composition preferably contains silica. Examples of the silica include dry silica (anhydrous silica) and wet silica (hydrous silica). These may be used alone or in combinations of two or more. Wet silica is preferred among these because it has a large number of silanol groups.

The silica preferably has a nitrogen adsorption specific surface area ($N_2SA$) of 40 $m^2/g$ or more, more preferably 70 $m^2/g$ or more, still more preferably 110 $m^2/g$ or more. When the $N_2SA$ is not less than the lower limit, good ice performance and abrasion resistance tend to be obtained. The $N_2SA$ of the silica is also preferably 220 $m^2/g$ or less, more preferably 200 $m^2/g$ or less. When the $N_2SA$ is not more than the upper limit, good dispersion and thus good abrasion resistance tend to be obtained.

The $N_2SA$ of the silica is measured by the BET method in accordance with ASTM D3037-93.

The silica may be a commercial product of, for example, Degussa, Rhodia, Tosoh silica Corporation, Solvay Japan, or Tokuyama Corporation.

The amount of the silica per 100 parts by mass of the rubber component is preferably 5 parts by mass or more, more preferably 10 parts by mass or more. When the amount is not less than the lower limit, good ice performance and abrasion resistance tend to be obtained. The amount is preferably 45 parts by mass or less, more preferably 35 parts by mass or less, still more preferably 25 parts by mass or less. When the amount is not more than the upper limit, good dispersion and thus good abrasion resistance tend to be obtained.

The rubber composition preferably contains a silane coupling agent together with silica.

Any silane coupling agent may be used, and examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. These may be used alone or in combinations of two or more. To better achieve the advantageous effect, sulfide or mercapto silane coupling agents are preferred among these.

The silane coupling agent may be a commercial product of, for example, Degussa, Momentive, Shin-Etsu Silicone, Tokyo Chemical Industry Co., Ltd., AZmax. Co., or Dow Corning Toray Co., Ltd.

The amount of the silane coupling agent per 100 parts by mass of the silica is preferably 3 parts by mass or more, more preferably 5 parts by mass or more. When the amount is 3 parts by mass or more, such addition tends to provide its effect. The amount is also preferably 25 parts by mass or less, more preferably 20 parts by mass or less, still more preferably 15 parts by mass or less. When the amount is 25 parts by mass or less, an effect commensurate with the added amount and good kneading processability tend to be obtained.

To significantly improve overall performance in terms of ice performance and abrasion resistance, the total amount of fillers (carbon black, silica, etc.) per 100 parts by mass of the rubber component is preferably 30 parts by mass or more, more preferably 40 parts by mass or more, still more preferably 50 parts by mass or more, but is preferably 110 parts by mass or less, more preferably 100 parts by mass or less, still more preferably 90 parts by mass or less.

The rubber composition preferably contains an oil.

Examples of the oil include process oils, plant oils, and mixtures thereof. Examples of the process oils include paraffinic process oils, aromatic process oils, and naphthenic process oils. Examples of the plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. These may be used alone or in combinations of two or more. To better achieve the advantageous effect, aromatic process oils are preferred among these.

The oil may be a commercial product of, for example, Idemitsu Kosan Co., Ltd., Sankyo Yuka Kogyo K.K., ENEOS Corporation, Olisoy, H&R, Hokoku Corporation, Showa Shell Sekiyu K.K., or Fuji Kosan Co., Ltd.

From standpoints such as ice performance, the amount of the oil per 100 parts by mass of the rubber component is preferably 5 parts by mass or more, more preferably 10 parts by mass or more. From the standpoint of abrasion resistance, the upper limit is preferably 40 parts by mass or less, more preferably 30 parts by mass or less, still more preferably 20 parts by mass or less.

The amount of the oil includes the amount of the oil, if present in the rubbers (oil extended rubbers) used.

The rubber composition may contain a liquid polymer.

The term "liquid polymer (liquid diene polymer)" refers to a diene polymer that is liquid at room temperature (25°C).

The liquid diene polymer preferably has a polystyrene equivalent weight average molecular weight (Mw) of $1.0 \times 10^3$ or more, more preferably $3.0 \times 10^3$ or more, still more preferably $5.0 \times 10^3$ or more, particularly preferably $1.0 \times 10^4$ or more, most preferably $2.0 \times 10^4$ or more, but preferably $2.0 \times 10^5$ or less, more preferably $1.0 \times 10^5$ or less, still more preferably $5.0 \times 10^4$ or less, particularly preferably $3.5 \times 10^4$ or less, as measured by gel permeation chromatography (GPC). When the Mw is within the range indicated above, the advantageous effect tends to be more suitably achieved.

The liquid diene polymer may be, for example, a (co)polymer of at least one selected from the group consisting of butadiene, isoprene, styrene, farnesene, and derivatives thereof. Such (co)polymers may be used alone or in combinations of two or more. Examples of the liquid diene polymer include liquid styrene-butadiene copolymers (liquid SBR), liquid polybutadiene polymers (liquid BR), liquid polyisoprene polymers (liquid IR), and liquid styrene-isoprene copolymers (liquid SIR). Among these, liquid SBR and liquid IR are preferred, with liquid IR being more preferred.

Moreover, the liquid diene polymer may be hydrogenated.

The liquid polymer may be a commercial product of, for example, CRAY VALLEY or Kuraray Co., Ltd.

The amount of the liquid polymer (liquid diene polymer) per 100 parts by mass of the rubber component is preferably 5 parts by mass or more, more preferably 10 parts by mass or more, still more preferably 20 parts by mass or more, but is preferably 60 parts by mass or less, more preferably 55 parts by mass or less, still more preferably 50 parts by mass or less, particularly preferably 45 parts by mass or less. When the amount is within the range indicated above, the advantageous effect tends to be more suitably achieved.

The rubber composition may contain a wax.

Any wax may be used. Examples include petroleum waxes such as paraffin waxes and microcrystalline waxes; naturally-occurring waxes such as plant waxes and animal waxes; and synthetic waxes such as polymers of ethylene, propylene, or other similar monomers. These may be used alone or in combinations of two or more. Petroleum waxes are preferred among these, with paraffin waxes being more preferred.

The wax may be a commercial product of, for example, Ouchi Shinko Chemical Industrial Co., Ltd., Nippon Seiro Co., Ltd., or Seiko Chemical Co., Ltd.

The amount of the wax per 100 parts by mass of the rubber component is preferably 0.3 parts by mass or more, more preferably 0.5 parts by mass or more, but is preferably 20 parts by mass or less, more preferably 10 parts by mass or less. When the amount is within the range indicated above, the advantageous effect tends to be better achieved.

The rubber composition may contain an antioxidant.

Examples of the antioxidant include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. These may be used alone or in combinations of two or more. Among these, p-phenylenediamine or quinolone antioxidants are preferred.

The antioxidant may be a commercial product of, for example, Seiko Chemical Co., Ltd., Sumitomo Chemical Co., Ltd., Ouchi Shinko Chemical Industrial Co., Ltd., or Flexsys.

The amount of the antioxidant per 100 parts by mass of the rubber component is preferably 0.5 parts by mass or more, more preferably 1 part by mass or more, but is preferably 10 parts by mass or less, more preferably 5 parts by mass or less. When the amount is within the range indicated above, the advantageous effect tends to be better achieved.

The rubber composition may contain stearic acid.

The stearic acid may be a conventional one, and examples include commercial products of NOF Corporation, Kao Corporation, FUJIFILM Wako Pure Chemical Corporation, and Chiba Fatty Acid Co., Ltd.

The amount of the stearic acid per 100 parts by mass of the rubber component is preferably 0.5 parts by mass or more, more preferably 1 part by mass or more, but is preferably 10 parts by mass or less, more preferably 5 parts by mass or less. When the amount is within the range indicated above, the advantageous effect tends to be better achieved.

The rubber composition may contain zinc oxide.

The zinc oxide may be a conventional one, and examples include commercial products of Mitsui Mining & Smelting Co., Ltd., Toho Zinc Co., Ltd., HakusuiTech Co., Ltd., Seido Chemical Industry Co., Ltd., and Sakai Chemical Industry Co., Ltd.

The amount of the zinc oxide per 100 parts by mass of the rubber component is preferably 0.5 parts by mass or more, more preferably 1 part by mass or more, but is preferably 10 parts by mass or less, more preferably 5 parts by mass or less. When the amount is within the range indicated above, the advantageous effect tends to be better achieved.

The rubber composition may contain sulfur.

Examples of the sulfur include those commonly used in the rubber industry, such as powdered sulfur, precipitated sulfur, colloidal sulfur, insoluble sulfur, highly dispersible sulfur, and soluble sulfur. These may be used alone or in combinations of two or more.

The sulfur may be a commercial product of, for example, Tsurumi Chemical Industry Co., Ltd., Karuizawa sulfur Co., Ltd., Shikoku Chemicals Corporation, Flexsys, Nippon Kanryu Industry Co., Ltd., or Hosoi Chemical Industry Co., Ltd.

The amount of the sulfur per 100 parts by mass of the rubber component is preferably 0.1 parts by mass or more, more preferably 0.5 part by mass or more, but is preferably 10 parts by mass or less, more preferably 5 parts by mass or less, still more preferably 3 parts by mass or less. When the amount is within the range indicated above, the advantageous effect tends to be better achieved.

The rubber composition preferably contains a vulcanization accelerator.

Examples of the vulcanization accelerator include thiazole vulcanization accelerators such as 2-mercaptobenzothiazole and di-2-benzothiazolyl disulfide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. To more suitably achieve the advantageous effect, sulfenamide and guanidine vulcanization accelerators are preferred among these, with combinations of sulfenamide and guanidine vulcanization accelerators being more preferred.

The vulcanization accelerator may be a commercial product of, for example, Kawaguchi Chemical Industry Co., Ltd., Ouchi Shinko Chemical Industrial Co., Ltd., or Sanshin Chemical Industry Co., Ltd.

The amount of the vulcanization accelerator per 100 parts by mass of the rubber component is preferably 0.5 parts by mass or more, more preferably 1 part by mass or more, but is preferably 10 parts by mass or less, more preferably 7 parts by mass or less, still more preferably 5 parts by mass or less. When the amount is within the range indicated above, the advantageous effect tends to be better achieved.

In addition to the above-mentioned components, the rubber composition may further contain additives commonly used in the tire industry, such as organic peroxides. The amount of such additives per 100 parts by mass of the rubber component is preferably 0.1 to 200 parts by mass.

The rubber composition may be prepared, for example, by kneading the components in a rubber kneading machine such as an open roll mill or Banbury mixer, and vulcanizing the kneaded mixture.

The kneading conditions are as follows: in a base kneading step of kneading additives other than vulcanizing agents and vulcanization accelerators, the kneading temperature is usually 100 to 180°C, preferably 120 to 170°C; and in a final kneading step of kneading vulcanizing agents and vulcanization accelerators, the kneading temperature is usually 120°C or lower, preferably 80 to 110°C. The composition kneaded with vulcanizing agents and vulcanization accelerators is usually vulcanized by press vulcanization, for example. The vulcanization temperature is usually 140 to 190°C, preferably 150 to 185°C. The vulcanization time is usually 5 to 15 minutes.

The rubber composition is suitable for use in treads (cap treads). It may also be used in other tire components, such as sidewalls, base treads, undertreads, clinch apexes, bead apexes, breaker cushion rubbers, rubbers for carcass cord topping, insulations, chafers, and innerliners, and side reinforcement layers of run-flat tires.

The heavy duty tire can be produced from the rubber composition by usual methods. Specifically, the unvulcanized rubber composition containing additives as needed may be extruded into the shape of a tire component (in particular, a tread (cap tread)) and then formed and assembled with other tire components in a tire building machine by a usual method to build an unvulcanized tire, which may then be heated and pressurized in a vulcanizer to produce a tire.

The tire component (for example, tread) of the heavy duty tire at least partially includes the rubber composition. The whole tire component may include the rubber composition.

Herein, the term "heavy duty tire" refers to a tire excellent especially in durability. Examples include tires for trucks and buses and industrial tires used in industrial vehicles such as heavy machines. All-steel tires using steel cords in both the carcass and the breakers are usually used as heavy duty tires.

The heavy duty tire has good overall performance in terms of ice performance and abrasion resistance and thus is suitable for use as a heavy-duty winter tire (e.g., a heavy-duty studless winter tire, a heavy-duty cold weather tire, a heavy-duty snow tire, a heavy-duty studded tire).

EXAMPLES

The present invention will be specifically described with reference to, but not limited to, examples.

The following describes the chemicals used in the examples and comparative examples.

NR: RSS#3

BR: BR150B (cis content: 98% by mass) available from Ube Industries, Ltd.

Carbon black 1: Seast N220 ($N_2SA$: 111 $m^2$/g, DBP absorption: 115 mL/100 g) available from Mitsubishi Chemical Corporation

Carbon black 2: a product ($N_2SA$: 145 $m^2$/g, DBP absorption: 132 mL/100 g) available from Mitsubishi Chemical Corporation

Silica: Ultrasil VN3 ($N_2SA$: 175 $m^2$/g) available from Evonik Degussa

Eggshell powder: eggshell powder (average particle size: 100 $\mu$m) available from Green Techno21

β-pinene resin: YS resin PX1150N (β-pinene resin, softening point: 115°C, Tg: 65°C) available from Yasuhara Chemical Co., Ltd.

α-pinene resin 1: α-pinene homopolymer (softening point 130°C, Mn: 742 g/mol, Mz: 1538 g/mol, Mw: 1055 g/mol, Mw/Mn: 1.42, Tg: 81°C, limonene unit content: 0% by mass)

α-pinene resin 2: pinene polymer (a-pinene: 90% by mass, β-pinene: 10% by mass, softening point: 130°C, Mn: 657 g/mol, Mz: 1332 g/mol, Mw: 917 g/mol, Mw/Mn: 1.40, Tg: 80°C, limonene unit content: 0% by mass)

Terpene styrene resin: SYLVATRAXX6720 (terpene styrene resin, softening point: 118°C) available from Arizona chemical

Terpene phenol resin: SYLVARES TP115 (terpene phenol resin, softening point: 115°C) available from Arizona chemical

α-methylstyrene resin: SYLVARES SA85 (a copolymer of α-methylstyrene and styrene, softening point: 85°C) available from Arizona chemical

Hydrogenated terpene resin: Clearon P125 (hydrogenated terpene resin, degree of hydrogenation: 100 mol%, softening point: 125°C) available from Yasuhara Chemical Co., Ltd.

Wax: Ozoace wax available from Nippon Seiro Co., Ltd.

Antioxidant: NOCRAC 6C available from Ouchi Shinko Chemical Industrial Co., Ltd.

Stearic acid: KIRI available from NOF Corporation

Zinc oxide: zinc oxide #2 available from Mitsui Mining & Smelting Co., Ltd.

Silane coupling agent: Si-69 available from Evonik Degussa

Oil: Diana Process NH-70S (aromatic process oil) available from Idemitsu Kosan Co., Ltd.

5% oil-containing sulfur: HK200-5 (50 oil-containing powdered sulfur) available from Hosoi Chemical Industry Co., Ltd.

Primary accelerator: NOCCELER CZ (vulcanization accelerator, N-cyclohexyl-2-benzothiazolylsulfenamide) available from Ouchi Shinko Chemical Industrial Co., Ltd.
Secondary accelerator: NOCCELER D (vulcanization accelerator, diphenylguanidine) available from Ouchi Shinko Chemical Industrial Co., Ltd.

(Examples and Comparative Examples)

The chemicals other than the sulfur and vulcanization accelerators in the formulation amounts indicated in Table 1 were kneaded at 150°C for five minutes using a 1.7 L Banbury mixer (Kobe Steel, Ltd.) to give a kneaded mixture. Then, the sulfur and vulcanization accelerators were added to the kneaded mixture, and they were kneaded at 80°C for five minutes using an open roll mill to give an unvulcanized rubber composition.

The unvulcanized rubber composition was press-vulcanized at 170°C for 10 minutes to give a vulcanized rubber composition.

Separately, the unvulcanized rubber composition prepared as above was formed into the shape of a cap tread and then assembled with other tire components to build an unvulcanized tire, followed by press vulcanization at 170°C for 10 minutes to prepare a test tire (heavy-duty winter tire, size: 11R22.5).

The vulcanized rubber compositions and test tires prepared as above were evaluated as described below. Table 1 shows the results.

<tan δ versus temperature curve>

A tan δ versus temperature curve of the (vulcanized) tread rubber cut out of each test tire was measured using a viscoelastic spectrometer (Iwamoto Seisakusho Co., Ltd.) at a frequency of 10 Hz, an initial strain of 100, an amplitude of ± 0.5%, and a temperature increase rate of 2°C/min over a temperature range from -120°C to 70°C. Then, the tan δ versus temperature curve was used to determine the tan δ at the peak in the temperature range of -70°C to -20°C, the half-width of the peak, and the value of (the tan δ at the peak)/(the half-width). Fig. 1 illustrates a tan δ versus temperature curve of a rubber composition as a typical example, in which the tan δ at the peak and the half width of the rubber composition are indicated.

<Surface roughness>

The tread rubber (a rubber piece cut out of the tread, vulcanized) cut out of each test tire was abraded using a Lambourn abrasion tester.

First, the rubber piece cut out of the tread was attached with a double-sided adhesive tape to a large Lambourn-type (iron) wheel having a diameter of 173 mm and a width of 22 mm. Subsequently, an abrasive paper (3M® 248D Three-M-Ite resin bond PSA roll) was attached to a smaller (iron) wheel having a diameter of 49 mm and a width of 8.5 mm to form an abrasive surface. The abrasion treatment with the Lambourn abrasion tester was carried out by rotating the wheels (grinding drum diameter: 175 mm, sample diameter: 49 mm, sample speed: 50 m/min, slip ratio: 40%) at a temperature of 20°C, a vertical load of 3 kg, a slip ratio of 40%, and a slip angle of 10% for eight minutes.

Then, the surface roughness of the abraded surface of the treated rubber was observed using a laser microscope VK9500 available from KEYENCE Corporation. The stage was moved in one direction and then the acquired images were connected to obtain height information in an area of 1.28 mm in width and 10.1 mm in length. The magnification of the objective lens was 10×. The numbers of data points in the two dimensions were 432 points and 3865 points, respectively. Then, the ten-point mean roughness was determined in accordance with Appendix 1 (Reference) of JIS B0601:2001.

<Ice performance>

The ice performance of the test tires mounted on a vehicle was evaluated under the following conditions. The test site was the Nayoro Tire Proving Ground of Sumitomo Rubber Industries, Ltd. in Hokkaido, Japan. The air temperature was -5°C to 0°C. Each set of test tires was mounted on a truck made in Japan. The distance required for the truck running on ice to stop after the brakes that lock up were applied at 30 km/h was measured. An ice performance index was calculated using the equation below, with Comparative Example 4 taken as reference. A higher index indicates better ice performance. An index of 85 or higher is considered good.

(Ice performance index) = (Brake stopping distance of
Comparative Example 4)/(Stopping distance of each
formulation example) × 100

<Abrasion resistance>

The abrasion loss of the vulcanized rubber compositions was measured using a Lambourn abrasion tester (Iwamoto Seisakusho Co., Ltd.) at a surface rotational speed of 50 m/min, an applied load of 3.0 kg, a sand feed rate of 15 g/min, and a slip ratio of 20%, and then a reciprocal of the abrasion loss was calculated. The reciprocal of the abrasion loss of Comparative Example 4 is set equal to 100, and the reciprocals of the abrasion losses of the other formulation examples are expressed as an index. A higher index indicates better abrasion resistance. An index of 100 or higher is considered good.

[Table 1]

| | | Comparative Example | | | | | | | | | Example | | | | | | | | | | | | | | |
|---|---|---|---|---|---|---|---|---|---|---|---|---|---|---|---|---|---|---|---|---|---|---|---|---|---|---|
| | | 1 | 2 | 3 | 4 | 5 | 6 | 7 | 8 | 9 | 1 | 2 | 3 | 4 | 5 | 6 | 7 | 8 | 9 | 10 | 11 | 12 | 13 | 14 |
| Amount (parts by mass) | NR | 62 | 62 | 62 | 62 | 62 | 62 | 62 | 62 | 62 | 62 | 62 | 62 | 62 | 62 | 62 | 62 | 62 | 62 | 62 | 62 | 62 | 62 | 62 |
| | BR | 38 | 38 | 38 | 38 | 38 | 38 | 38 | 38 | 38 | 38 | 38 | 38 | 38 | 38 | 38 | 38 | 38 | 38 | 38 | 38 | 38 | 38 | 38 |
| | Carbon black 1 | 20 | 20 | 20 | 20 | 20 | 20 | 20 | 20 | 20 | 20 | 20 | 20 | 20 | 20 | 20 | 20 | 20 | 20 | 20 | 20 | 20 | 20 | 20 |
| | Carbon black 2 | 36 | 36 | 36 | 36 | 36 | 36 | 36 | 36 | 36 | 36 | 36 | 36 | 36 | 36 | 36 | 36 | 36 | 36 | 36 | 36 | 36 | 36 | 36 |
| | Silica | 14 | 14 | 14 | 14 | 14 | 14 | 14 | 14 | 14 | 14 | 14 | 14 | 14 | 14 | 14 | 14 | 14 | 14 | 14 | 14 | 14 | 14 | 14 |
| | Eggshell powder (100 μm) | – | – | – | 12 | 12 | 12 | 12 | 12 | 12 | 12 | 12 | 12 | 12 | 12 | 12 | 12 | 12 | 0.5 | 2 | 4 | 6 | 8 | 12 |
| | β-pinene resin | 6 | – | – | 6 | – | – | – | – | – | – | – | – | – | – | – | – | – | – | – | – | – | – | – |
| | α-pinene resin 1 | – | – | 3 | – | – | – | – | – | – | 6 | 9 | 12 | 15 | 3 | 8 | 11 | 13 | 6 | 6 | 6 | 6 | 6 | – |
| | α-pinene resin 2 | – | – | – | – | – | – | – | – | – | – | – | – | – | – | – | – | – | – | – | – | – | – | 15 |
| | Terpene styrene resin | – | – | – | – | – | 6 | – | – | – | – | – | – | – | – | – | – | – | – | – | – | – | – | – |
| | Terpene phenol resin | – | – | – | – | – | – | 6 | – | – | – | – | – | – | – | – | – | – | – | – | – | – | – | – |
| | α-methylstyrene resin | – | – | – | – | – | – | – | 6 | – | – | – | – | – | – | – | – | – | – | – | – | – | – | – |
| | Hydrogenated terpene resin | – | – | – | – | – | – | – | – | 6 | – | – | – | – | – | – | – | – | – | – | – | – | – | – |
| | Wax | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 |
| | Antioxidant | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 |
| | Stearic acid | 4 | 4 | 4 | 4 | 4 | 4 | 4 | 4 | 4 | 4 | 4 | 4 | 4 | 4 | 4 | 4 | 4 | 4 | 4 | 4 | 4 | 4 | 4 |
| | Zinc oxide | 3 | 3 | 3 | 3 | 3 | 3 | 3 | 3 | 3 | 3 | 3 | 3 | 3 | 3 | 3 | 3 | 3 | 3 | 3 | 3 | 3 | 3 | 3 |
| | Silane coupling agent | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 |
| | Oil | 13 | 13 | 13 | 13 | 13 | 13 | 13 | 13 | 13 | 13 | 13 | 13 | 13 | 13 | 13 | 13 | 13 | 13 | 13 | 13 | 13 | 13 | 13 |
| | 5% oil-containing sulfur | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 |
| | Primary accelerator | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 |
| | Secondary accelerator | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| Properties | tan δ at peak | 0.60 | 0.50 | 0.65 | 0.60 | 0.50 | 0.53 | 0.51 | 0.54 | 0.52 | 0.67 | 0.69 | 0.71 | 0.73 | 0.65 | 0.68 | 0.70 | 0.72 | 0.67 | 0.67 | 0.67 | 0.67 | 0.67 | 0.73 |
| | Half-width | 30 | 40 | 30 | 30 | 40 | 37 | 39 | 36 | 38 | 30 | 28 | 26 | 24 | 32 | 29 | 27 | 25 | 30 | 30 | 30 | 30 | 30 | 24 |
| | Value of relationship (1) | 0.020 | 0.013 | 0.022 | 0.020 | 0.013 | 0.014 | 0.013 | 0.015 | 0.014 | 0.022 | 0.025 | 0.027 | 0.030 | 0.021 | 0.024 | 0.026 | 0.028 | 0.022 | 0.022 | 0.022 | 0.022 | 0.022 | 0.030 |
| | Surface roughness (Ra) | 5.4 | 5.4 | 5.4 | 10.4 | 10.4 | 10.4 | 10.4 | 10.4 | 10.4 | 10.4 | 10.4 | 10.4 | 10.4 | 10.4 | 10.4 | 10.4 | 10.4 | 5.5 | 6.0 | 6.5 | 7.0 | 7.5 | 10.4 |
| Evaluation results | Ice performance | 80 | 68 | 76 | 100 | 88 | 91 | 89 | 92 | 90 | 105 | 112 | 116 | 128 | 100 | 110 | 114 | 122 | 85 | 88 | 91 | 94 | 97 | 128 |
| | Abrasion resistance | 115 | 120 | 115 | 100 | 105 | 100 | 100 | 100 | 100 | 113 | 118 | 118 | 113 | 110 | 115 | 118 | 115 | 125 | 123 | 121 | 119 | 117 | 113 |

As demonstrated in Table 1, the tires of the examples including a tread which contained an isoprene-based rubber, a polybutadiene rubber, and a resin and showed a tan $\delta$ versus temperature curve with a tan $\delta$ peak in the temperature range of -70°C to -20°C, wherein the tan $\delta$ at the peak and the half-width of the peak satisfied relationship (1), and which had a surface roughness after abrasion of 5.5 or more exhibited improved overall performance in terms of ice performance and abrasion resistance (as shown by the sum of the two indexes: ice performance and abrasion resistance).

**Claims**

1.  A heavy duty tire, comprising a tread,

    the tread comprising an isoprene-based rubber, a polybutadiene rubber, and a resin,
    the tread showing a tan $\delta$ versus temperature curve with a tan $\delta$ peak in the temperature range of -70°C to -20°C, wherein a tan $\delta$ at the peak and a half-width of the peak satisfy the relationship (1) below,
    the tread having a surface roughness after abrasion of 5.5 or more,

    $$\text{(the tan } \delta \text{ at the peak in the temperature range of } -70°C \text{ to } -20°C)/(\text{the half-width of the peak}) \geq 0.021 \quad (1).$$

2.  The heavy duty tire according to claim 1,
    wherein the value of relationship (1) is 0.022 or more.

3.  The heavy duty tire according to claim 1,
    wherein the value of relationship (1) is 0.023 or more.

4.  The heavy duty tire according to claim 1,
    wherein the value of relationship (1) is 0.024 or more.

5.  The heavy duty tire according to any one of claims 1 to 4,
    wherein the surface roughness is 6.0 or more.

6.  The heavy duty tire according to any one of claims 1 to 4,
    wherein the surface roughness is 6.5 or more.

7.  The heavy duty tire according to any one of claims 1 to 6,
    wherein the resin is a terpene resin.

8.  The heavy duty tire according to any one of claims 1 to 6,
    wherein the resin is a terpene resin having an $\alpha$-pinene unit content of 65 to 100% by mass, a $\beta$-pinene unit content of 0 to 35% by mass, and a limonene unit content of 10% by mass or less.

9.  The heavy duty tire according to any one of claims 1 to 8,
    wherein the tread comprises eggshell powder.

10. The heavy duty tire according to claim 9,
    wherein the eggshell powder has an average particle size of 70 um or more.

**Patentansprüche**

1.  Schwerlastreifen, umfassend einen Laufstreifen,

    wobei der Laufstreifen einen Isopren-basierten Kautschuk, einen Polybutadien-Kautschuk und ein Harz umfasst,
    wobei der Laufstreifen eine Kurve von tan $\delta$ gegen Temperatur mit einem tan $\delta$-Peak im Temperaturbereich von -70°C bis -20°C zeigt, wobei ein tan $\delta$ bei dem Peak und eine Halbwertsbreite des Peaks dem nachstehenden Verhältnis (1) genügen,

wobei der Laufstreifen eine Oberflächenrauigkeit nach Abrieb von 5,5 oder mehr aufweist,

$$\text{(tan } \delta \text{ bei dem Peak im Temperaturbereich von -70°C bis -20°C) /}$$

$$\text{(Halbwertsbreite des Peaks)} \geq 0{,}021 \quad (1).$$

2. Schwerlastreifen nach Anspruch 1,
   wobei der Wert des Verhältnisses (1) 0,022 oder mehr beträgt.

3. Schwerlastreifen nach Anspruch 1,
   wobei der Wert des Verhältnisses (1) 0,023 oder mehr beträgt.

4. Schwerlastreifen nach Anspruch 1,
   wobei der Wert des Verhältnisses (1) 0,024 oder mehr beträgt.

5. Schwerlastreifen nach einem der Ansprüche 1 bis 4,
   wobei die Oberflächenrauigkeit 6,0 oder mehr beträgt.

6. Schwerlastreifen nach einem der Ansprüche 1 bis 4,
   wobei die Oberflächenrauigkeit 6,5 oder mehr beträgt.

7. Schwerlastreifen nach einem der Ansprüche 1 bis 6,
   wobei das Harz ein Terpenharz ist.

8. Schwerlastreifen nach einem der Ansprüche 1 bis 6,
   wobei das Harz ein Terpenharz mit einem Gehalt an $\alpha$-Pinen-Einheiten von 65 bis 100 Massenprozent, einem Gehalt an $\beta$-Pinen-Einheiten von 0 bis 35 Massenprozent, und einem Gehalt an Limonen-Einheiten von 10 Massenprozent oder weniger ist.

9. Schwerlastreifen nach einem der Ansprüche 1 bis 8,
   wobei der Laufstreifen Eierschalenpulver umfasst.

10. Schwerlastreifen nach Anspruch 9,
    wobei das Eierschalenpulver eine mittlere Partikelgröße von 70 $\mu$m oder mehr aufweist.

**Revendications**

1. Pneu pour fonctionnement intensif, comprenant une bande de roulement, la bande de roulement comprenant un caoutchouc à base d'isoprène, un caoutchouc polybutadiène, et une résine,

   la bande de roulement présentant une courbe tan $\delta$ en fonction de la température avec un pic de tan $\delta$ dans la plage de température de -70 °C à -20 °C, dans lequel tan $\delta$ au pic et la demie largeur du pic satisfont la relation (1) ci-dessous,
   la bande de roulement ayant une rugosité de surface après abrasion de 5,5 ou plus,

$$\text{(tan } \delta \text{ au pic dans la plage de température de } -70 \text{ °C à } -20 \text{ °C) / (demie lar-}$$

$$\text{geur du pic)} \geq 0{,}021 \quad (1).$$

2. Pneu pour fonctionnement intensif selon la revendication 1,
   dans lequel la valeur de la relation (1) est de 0,022 ou plus.

3. Pneu pour fonctionnement intensif selon la revendication 1,
   dans lequel la valeur de la relation (1) est de 0,023 ou plus.

**4.** Pneu pour fonctionnement intensif selon la revendication 1, dans lequel la valeur de la relation (1) est de 0,024 ou plus.

**5.** Pneu pour fonctionnement intensif selon l'une quelconque des revendications 1 à 4,
dans lequel la rugosité de surface est de 6,0 ou plus.

**6.** Pneu pour fonctionnement intensif selon l'une quelconque des revendications 1 à 4,
dans lequel la rugosité de surface est de 6,5 ou plus.

**7.** Pneu pour fonctionnement intensif selon l'une quelconque des revendications 1 à 6,
dans lequel la résine est une résine terpène.

**8.** Pneu pour fonctionnement intensif selon l'une quelconque des revendications 1 à 6,
dans lequel la résine est une résine terpène ayant une teneur en unités $\alpha$-pinène de 65 à 100 % en masse, une teneur en unités $\beta$-pinène de 0 à 35 % en masse, et une teneur en unités limonène de 10 % en masse ou moins.

**9.** Pneu pour fonctionnement intensif selon l'une quelconque des revendications 1 à 8,
dans lequel la bande de roulement comprend de la poudre de coquille d'oeuf.

**10.** Pneu pour fonctionnement intensif selon la revendication 9,
dans lequel la poudre de coquille d'oeuf a une taille particulaire moyenne de 70 $\mu$m ou plus.

Fig. 1

tan $\delta$ at peak

Half-width

100%

50%

tan $\delta$

Temperature (℃)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018119025 A
- JP 2018154664 A